# EUROPEAN PATENT APPLICATION

(11) **EP 4 636 467 A1**
(43) Date of publication of application: **22.10.2025**
(21) Application number: 25170560.4
(22) Date of filing: 15.04.2025
(51) Int. Cl.: G02F 1/13, G02F 1/1333, G02F 1/13357

(54) **DUAL-SIDED DISPLAY**

(30) Priority: 19.04.2024 CN 202410476830
(71) Applicant: InnoLux Corporation, Jhunan Town Miao li 35053 (TW)
(72) Inventor: HSU, Yi-Chen, 35053 Jhunan Town, Miaoli County (TW); LU, Chih-Yen, 35053 Jhunan Town, Miaoli County (TW); HO, Szu-Ying, 35053 Jhunan Town, Miaoli County (TW); LEE, Yi-Hui, 35053 Jhunan Town, Miaoli County (TW); CHEN, Kuan-Chou, 35053 Jhunan Town, Miaoli County (TW)
(74) Representative: Becker, Eberhard

(57) **Abstract**

A dual-sided display having a first surface and a second surface opposite to the first surface is provided. The dual-sided display includes a first display panel, a second display panel, and a backlight module. The first display panel is used to display an image on the first surface. The second display panel is used to display an image on the second surface. The backlight module is disposed between the first display panel and the second display panel to provide light sources for the first display panel and the second display panel. The backlight module includes a light guide plate, a light emitting element, and a peep-proof element. The light emitting element is used to provide the light sources and is disposed adj acent to one side of the light guide plate. The peep-proof element is disposed between the light guide plate and the second display panel.

## Description

### BACKGROUND

### Technical Field

The disclosure relates to a dual-sided display, and more particularly, to a dual-sided display for medical use.

### Description of Related Art

A dual-sided display with touch functions have not yet been applied in the medical field. Main reasons are that personal information may be leaked when displayed, and/or it may easily become a medium for the spread of diseases under frequent contact with users.

### SUMMARY

The disclosure provides a dual-sided display, which may reduce a risk of information leakage.

According to some embodiments of the disclosure, a dual-sided display is provided, including a first surface and a second surface opposite to the first surface. The dual-sided display includes a first display panel, a second display panel, and a backlight module. The first display panel is configured to display an image of the first surface. The second display panel is configured to display an image of the second surface. The backlight module is disposed between the first display panel and the second display panel to provide light sources for the first display panel and the second display panel. The backlight module includes a light guide plate, a light emitting element, and a peep-proof element. The light emitting element is configured to provide the light source and is disposed adjacent to one side of the light guide plate. The peep-proof element is configured to adjust a light emission angle of a display light and is disposed between the light guide plate and the second display panel.

Based on the above, the backlight module in the dual-sided display provided in the disclosure includes the peep-proof element disposed between the light guide plate and the second display panel. Therefore, the risk of information leakage may be reduced when the second display panel is used to display the information.

In order for the aforementioned features and advantages of the disclosure to be more comprehensible, embodiments accompanied with drawings are described in detail below.

### BRIEF DESCRIPTION OF THE DRAWINGS

FIG. 1A is a schematic three-dimensional view of a dual-sided display according to an embodiment of the disclosure.
FIG. 1B is a schematic partial cross-sectional view of a dual-sided display according to the embodiment of FIG. 1A.
FIG. 2 is a schematic view of a coupling method of a first display panel and a second display panel to an electronic device in a dual-sided display according to an embodiment of the disclosure.
FIG. 3 is a schematic partial cross-sectional view of a dual-sided display according to another embodiment of FIG. 1A.

### DETAILED DESCRIPTION OF DISCLOSED EMBODIMENTS

Reference will now be made in detail to the exemplary embodiments of the disclosure, and examples of the exemplary embodiments are illustrated in the accompanying drawings. Whenever possible, the same reference numerals are used in the drawings and descriptions to indicate the same or similar parts.

The disclosure can be understood by referring to the following detailed description in combination with the accompanying drawings. It should be noted that in order to make it easy for the reader to understand and for the simplicity of the drawings, the multiple drawings in this disclosure only depict a part of the electronic device, and the specific components in the drawings are not drawn according to actual scale. In addition, the number and size of each component in the drawings are only for exemplary purpose, and are not intended to limit the scope of the disclosure.

Throughout the disclosure and the appended claims, certain words are used to refer to specific components. Those skilled in the art should understand that electronic device manufacturers may refer to the same components by different names. The disclosure does not intend to distinguish those components with the same function but different names. In the following description and claims, the terms "including", "containing", and "having" are openended terms, so they should be interpreted as "include but not limited to...". Therefore, when the terms "including", "containing", and/or "having" are used in the description of this disclosure, they specify the existence of a corresponding feature, region, step, operation, and/or component, but do not exclude the existence of one or more corresponding features, regions, steps, operations, and/or components.

Direction terms mentioned in this specification, such as such as "up," "down," "front," "back," "left," and "right," merely refer to directions in the accompanying drawings. Therefore, the direction terms used is for illustration, not for limiting this disclosure. In the drawings, each drawing shows the general features of the method, structure, and/or material used in a specific embodiment. However, these drawings should not be construed as defining or limiting the scope or nature of the embodiments. For example, for the sake of clarity, the relative size, thickness, and position of each layer, region, and/or structure may be reduced or enlarged.

When a corresponding member (such as a layer or a region) is described as being "on another member," it may be directly disposed or formed on another member, or there may be other member therebetween. On the other hand, when a member is described as being "directly on another member," no member exists therebetween. In addition, when a member is described as being "on another member," the two have a vertical relationship in the top view direction, and this member may be located above or below the other member, and the vertical relationship depends on the device orientation.

The terms "equal to" or "same" and "essentially" or "substantially" are generally interpreted as within 20% of a given value or range, or as within 10%, 5%, 3%, 2%, 1%, or 0.5% of the value or range.

Ordinal numbers in this specification and the claims such as "first" and "second" are used to modify a component, and do not imply or represent that the (or these) component(s) has (or have) any ordinal number, and do not indicate any order between a component and another component, or an order in a manufacturing method. These ordinal numbers are merely used to clearly distinguish a component having a name with another component having the same name. Different terms may be used in the claims and the specification, so that a first member in the specification may be a second member in the claims.

It should be understood that the following embodiments may replace, reorganize, and mix the features in several different embodiments to complete other embodiments without departing from the spirit of the disclosure. As long as the features of the embodiments do not violate the spirit of the disclosure or conflict each other, they may be mixed and matched as desired.

An electrical connection or coupling relationship described in this disclosure may refer to a direct connection or an indirect connection. In the case of the direct connection, end points of the elements on two circuits are directly connected or connected to each other by a conductor segment, and in the case of the indirect connection, there are switches, diodes, capacitors, inductors, resistors, other appropriate elements, or a combination of the above elements between the end points of the elements on the two circuits, but the disclosure is not limited thereto.

In this disclosure, measurement of a thickness, length, width, and area may be done by applying an optical microscope, and the thickness may be obtained by measuring a cross-sectional image in an electron microscope, but the disclosure is not limited thereto. In addition, certain errors between any two values or directions for comparison may be acceptable. If a first value is equal to a second value, it implies that there may be an error of about 10% between the first value and the second value. If a first direction is perpendicular to a second direction, an angle difference between the first direction and the second direction may be between 80 degrees and 100 degrees; if the first direction is parallel to the second direction, an angle difference between the first direction and the second direction may be between 0 degrees and 10 degrees.

A display device in the disclosure may be a non-self-luminous display device or a self-luminous display device, and may be a dual-sided display device. The display device may include, for example, a diode, a liquid crystal, a light emitting diode (LED), a quantum dot (QD), fluorescence, phosphor, other suitable display media, or a combination thereof. The light emitting diode may include, for example, an organic light emitting diode (OLED), a micro-LED, a mini-LED, or a quantum dot light emitting diode (QDLED), but the disclosure is not limited thereto. It should be noted that the display device may be any arrangement or combination of the aforementioned, but the disclosure is not limited thereto. In addition, the display device may be in a shape of a rectangle, a circle, a polygon, a shape with curved edges, or other suitable shapes. The display device may have peripheral systems such as a driving system, a control system, and a light source system.

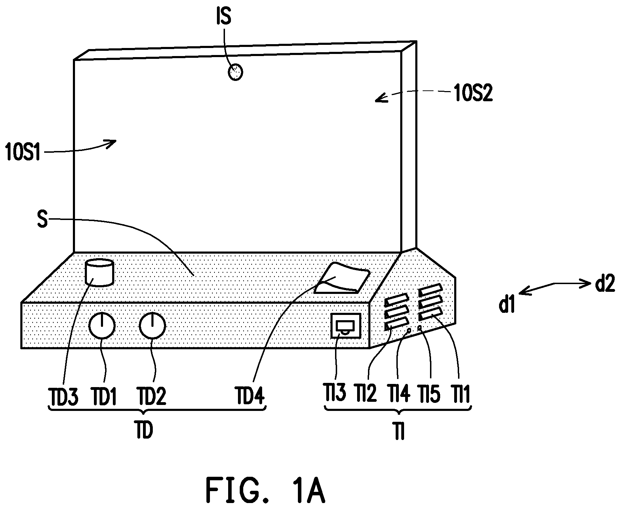

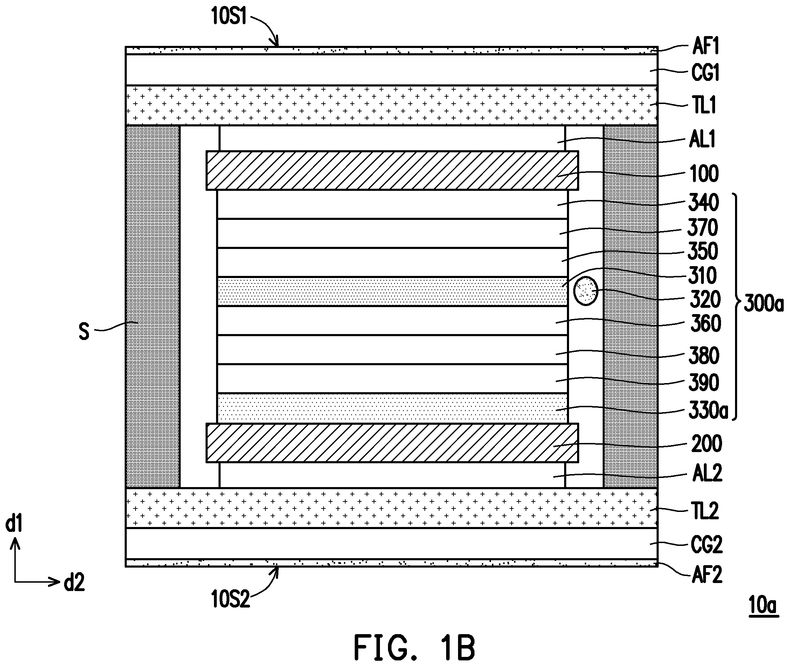

FIG. 1Ais a schematic three-dimensional view of a dual-sided display according to an embodiment of the disclosure. FIG. 1B is a schematic partial cross-sectional view of a dual-sided display according to the embodiment of FIG. 1A.

Referring to FIG. 1A and FIG. 1B, a dual-sided display 10a in this embodiment includes a first surface 10S1 and a second surface 10S2 opposite to the first surface 10S1. The first surface 10S1 and the second surface 10S2 may be used to display the same frame or different frames respectively, which will be described in detail in the following embodiments. The dual-sided display 10a in this embodiment may be applied to a medical display. The first surface 10S1 faces medical personnel, and the second surface 10S2 faces patients. However, the disclosure is not limited thereto. In other embodiments, the dual-sided display 10a may be applied to a digital gallery, a mobile phone, a tablet computer, and/or a public information display.

In this embodiment, the dual-sided display 10a includes a first display panel 100, a second display panel 200, and a backlight module 300a.

The first display panel 100 emits a light toward a direction d1, for example, to display an image on the first surface 10S1 of the dual-sided display 10a. In this embodiment, the first display panel 100 is a liquid crystal display panel, but the disclosure is not limited thereto. In some embodiments, the first display panel 100 includes a substrate (not shown), an element layer (not shown), and a display medium (not shown). The substrate of the first display panel 100 may include, for example, a flexible substrate or an inflexible substrate, and a material of the substrate may include, for example, glass, plastic, or a combination thereof. For example, the substrate of the first display panel 100 may include quartz, sapphire, polymethyl methacrylate (PMMA), polycarbonate (PC), polyimide (PI), polyethylene terephthalate (PET), or other suitable materials or a combination thereof, but the disclosure is not limited thereto. The element layer of the first display panel 100 is, for example, disposed on the substrate, and may, for example, include a circuit structure to drive the display medium. For example, the element layer of the first display panel 100 may include multiple scan lines, multiple data lines, an insulating layer, a capacitor, multiple transistors, and/or multiple electrodes, but the disclosure is not limited thereto. In some embodiments, the element layer of the first display panel 100 may include multiple circuits but not the transistors. The display medium of the first display panel 100 may be disposed on the element layer, for example. In this embodiment, the display medium of the first display panel 100 includes liquid crystal molecules, and the liquid crystal molecules are liquid crystal molecules that may be rotated or switched by a vertical electric field or liquid crystal molecules that may be rotated or switched by a transverse electric field. However, the disclosure is not limited thereto.

The second display panel 200, for example, emits the light toward a direction different from the direction d1, so as to display an image on the second surface 10S2 of the dual-sided display 10a. In this embodiment, the second display panel 200 emits the light toward a direction opposite to the direction d1, but the disclosure is not limited thereto. In this embodiment, the second display panel 200 is also a liquid crystal display panel. That is, the second display panel 200 may be the same as or similar to the first display panel 100, but the disclosure is not limited thereto.

The backlight module 300a is, for example, disposed between the first display panel 100 and the second display panel 200 to provide light sources for the first display panel 100 and the second display panel 200. In this embodiment, the backlight module 300a includes a light guide plate 310, a light emitting element 320, and a peep-proof element 330a.

The light guide plate 310, for example, has a first light emitting surface (not shown) facing the first display panel 100 and a second light emitting surface (not shown) facing the second display panel 200. In addition, the light guide plate 310 has, for example, high light transmittance and may be used, for example, to guide a direction of travel of the light. In detail, the light guide plate 310 may provide the light emitted by the light emitting element 320 to the first display panel 100 and the second display panel 200 respectively. In some embodiments, the first light emitting surface and the second light emitting surface of the light guide plate 310 may each have multiple first microstructures (not shown) and multiple second microstructures (not shown). The number of the first microstructures per unit area may be the same as or different from the number of the second microstructures per unit area. In addition, in some embodiments, surfaces of the first microstructures are one of a curved surface or a flat surface, and surfaces of the second microstructures are the other of the curved surface or the flat surface. However, the disclosure is not limited thereto. The first microstructures and the second microstructures of the light guide plate 310 may be used, for example, to allow the light emitted by the light emitting element 320 to be transmitted in the light guide plate 310 and to provide a surface source with good uniformity. However, the disclosure is not limited thereto.

The light emitting element 320 is used, for example, to provide the light source to the light guide plate 310, and is, for example, disposed adjacent to one side of the light guide plate 310. In this embodiment, the light emitting element 320 is an edge-type light emitting element, so that a thickness of the dual-sided display 10a may be reduced, but the disclosure is not limited thereto. The light provided by the light emitting element 320 may be transmitted in the light guide plate 310, for example, and provided to the first display panel 100 and the second display panel 200 respectively through the first light emitting surface and the second light emitting surface of the light guide plate 310, for example. The light emitting element 320 may include, for example, a light emitting diode. For example, the light emitting element 320 may include a light emitting diode point light source, but the disclosure is not limited thereto.

The peep-proof element 330a is used, for example, to adjust a light emission angle of a display light, and is, for example, disposed between the light guide plate 310 and the second display panel 200. In detail, after the light passes through the light guide plate 310 and perforates through the peep-proof element 330a, divergence thereof may be reduced, and/or collimation thereof may be improved. That is, the peep-proof element 330a may be used to collimate the light from the light guide plate 310. In this embodiment, the peep-proof element 330a includes a peep-proof sheet. In detail, the peep-proof element 330a may have, for example, multiple light shielding structures (not shown) and a plurality of light transmitting structures (not shown). The light shielding structures and the light transmitting structures may be arranged alternately in a direction d2, for example. The direction d2 may be perpendicular to the direction d1, for example, but the disclosure is not limited thereto. For example, one light transmitting structure is disposed between two adjacent light shielding structures, but the disclosure is not limited thereto. It is worth noting that although FIG. 1B shows that a position of the peep-proof element 330a is between the light guide plate 310 and the second display panel 200, the disclosure is not limited thereto.

In some embodiments, the backlight module 300a further includes a first diffusion sheet 340, a second diffusion sheet 350, a third diffusion sheet 360, a first prism sheet 370, a second prism sheet 380, and a dual brightness enhancement film (DBEF) 390.

The first diffusion sheet 340 is, for example, disposed between the first display panel 100 and the light guide plate 310. In some embodiments, the first diffusion sheet 340 may be used to diffuse the light from the light guide plate 310 to be provided to the first display panel 100, and may be used, for example, to conceal blemishes. The second diffusion sheet 350 is, for example, disposed between the first diffusion sheet 340 and the light guide plate 310. In some embodiments, the second diffusion sheet 350 may also be used to diffuse the light from the light guide plate 310 to be provided to the first display panel 100, and may have relatively high light transmittance, for example. The third diffusion sheet 360 is, for example, disposed between the second display panel 200 and the light guide plate 310. In some embodiments, the third diffusion sheet 360 is used to diffuse the light from the light guide plate 310 to be provided to the second display panel 200, and has relatively high light transmittance, for example.

The first prism sheet 370 is, for example, disposed between the first diffusion sheet 340 and the second diffusion sheet 350. In some embodiments, the first prism sheet 370 may include multiple prism structures (not shown) to concentrate the light from the light guide plate 310 to a direction of a front-view angle of the first display panel 100, but the disclosure is not limited thereto. The second prism sheet 380 is, for example, disposed between the third diffusion sheet 360 and the peep-proof element 330a. In some embodiments, the second prism sheet 380 may also include multiple prism structures (not shown) to concentrate the lights from the light guide plate 310 to a direction of a front-view angle of the second display panel 200, but the disclosure is not limited thereto.

The dual brightness enhancement film 390 is, for example, disposed between the second prism sheet 380 and the peep-proof element 330a. In some embodiments, the dual brightness enhancement film 390 may be used to improve utilization efficiency of the light from the light guide plate 310 to be provided to the second display panel 200. In this embodiment, an angle of the dual brightness enhancement film 390 is 90 degrees to an extension direction of the light shielding structures in the peep-proof element 330a, but the disclosure is not limited thereto.

In some embodiments, the dual-sided display 10a further includes a first touch layer TL1, a second touch layer TL2, a first cover plate CG1, and a second cover plate CG2.

The first touch layer TL1 is, for example, disposed on one side of the first display panel 100 away from the backlight module 300a. From another perspective, the first display panel 100 is, for example, disposed between the first touch layer TL1 and the backlight module 300a. The first touch layer TL1 may be bonded to the first display panel 100 through an adhesion layer AL1, for example. In some embodiments, the adhesion layer AL1 includes an optical clear adhesive (OCA), which may include an acrylic resin, a silicone resin, an epoxy resin, or other suitable materials or a combination of the above materials, but the disclosure is not limited thereto. In some embodiments, the first touch layer TL1 may include multiple touch patterns (not shown) arranged in an array and having a specific shape to achieve capacitive coupling. On this basis, when a finger of a user or other objects touch or approach some of the touch patterns of the first touch layer TL1, changes in capacitance values of the touch patterns may be used to determine whether a touch operation is completed, and a touch position corresponding to the touch operation may be located. In some embodiments, a material of the first touch layer TL1 includes a transparent conductive material. For example, the material of the first touch layer TL1 may be transparent conductive oxide (TCO), and the material may include indium zinc oxide (IZO), aluminum zinc oxide (AZO), gallium zinc oxide (GZO), or other suitable materials, but the disclosure is not limited thereto.

The second touch layer TL2 is, for example, disposed on one side of the second display panel 200 away from the backlight module 300a. From another perspective, the second display panel 200 is, for example, disposed between the second touch layer TL2 and the backlight module 300a. The second touch layer TL2 may be bonded to the second display panel 200 through an adhesion layer AL2, for example. In some embodiments, the adhesion layer AL2 may also include the optical clear adhesive, but the disclosure is not limited thereto. In this embodiment, the second touch layer TL2 may be the same as or similar to the first touch layer TL1, but the disclosure is not limited thereto.

The first cover plate CG1 is, for example, disposed on the first touch layer TL1, and is, for example, disposed on one side of the first touch layer TL1 away from the first display panel 100. The first cover plate CG1 may, for example, include effects such as dust proof, scratch resistance, and resistance to water vapor intrusion to reduce an impact of an external environment on components inside the dual-sided display 10a, and may have light transmittance, for example. In some embodiments, a material of the first cover plate CG1 may include glass, and a type or composition of the glass is not particularly limited, which may be, for example, aluminosilicate glass, lithium aluminosilicate glass, soda-lime-silicate glass, quartz glass, or other light-transmitting glass, but the disclosure is not limited thereto. In some other embodiments, the material of the first cover plate CG1 may include an organic material, which may be, for example, a resin, acrylic, or other suitable organic materials. It is a method in which a curable composition is coated on a support member and then dried and cured. In this embodiment, a coverage area of the first cover plate CG1 is greater than or equal to an area of the first touch layer TL1, so as to reduce the impact of the external environment on the first touch layer TL1, but the disclosure is not limited thereto. In some embodiments, an edge of the first cover plate CG1 may have an arc angle, but the disclosure is not limited thereto.

The second cover plate CG2 is, for example, disposed on the second touch layer TL2, and is, for example, disposed on one side of the second touch layer TL2 away from the second display panel 200. In this embodiment, the second cover plate CG2 may be the same as or similar to the first cover plate CG1, but the disclosure is not limited thereto. In this embodiment, a coverage area of the second cover plate CG2 is greater than or equal to an area of the second touch layer TL2, so as to reduce the impact of the external environment on the second touch layer TL2, but the disclosure is not limited thereto. In some embodiments, an edge of the second cover plate CG2 may have an arc angle, but the disclosure is not limited thereto.

In this embodiment, the first cover plate CG1 and/or the second cover plate CG2 further include an antibacterial structure. In an embodiment, the antibacterial structure may be, for example, coated with an antibacterial film AF 1 and an antibacterial film AF2 on surfaces of the first cover plate CG1 and the second cover plate CG2 adjacent to a light emitting side respectively. In detail, the antibacterial film AF 1 is, for example, disposed on one side of the first cover plate CG1 away from the first touch layer TL1, and the antibacterial film AF2 is, for example, disposed on one side of the second cover plate CG2 away from the second touch layer TL2. The antibacterial film AF1 and the antibacterial film AF2 each include, for example, an inorganic antibacterial material, an organic antibacterial material, or a combination thereof. In this embodiment, the antibacterial film AF1 and the antibacterial film AF2 each include silver ions, but the disclosure is not limited thereto. The antibacterial film AF1 and the antibacterial film AF2 may be formed on the first cover plate CG1 and the second cover plate CG2 respectively through a sputtering process, for example, but the disclosure is not limited thereto. In this embodiment, the silver ions in the antibacterial film AF 1 and the antibacterial film AF2 may attract bacteria or viruses through opposite electrical properties thereof, so that the bacteria or viruses are destroyed and killed by the silver ions, thereby achieving an antibacterial effect. On this basis, by disposing the antibacterial film AF1 and the antibacterial film AF2, a possibility of the dual-sided display 10a in this embodiment becoming a medium for spread of diseases under frequent contact by the user may be reduced.

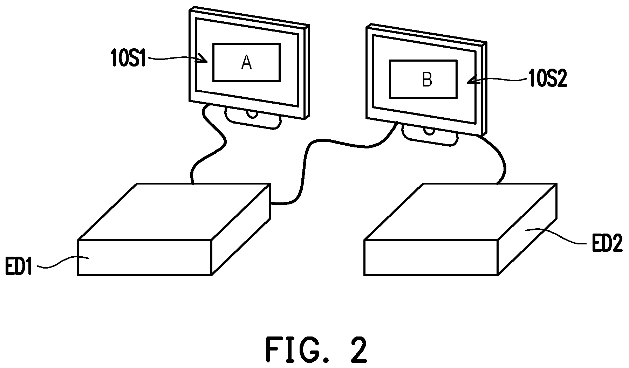

In some embodiments, the dual-sided display 10a further includes a casing S. The casing S is, for example, directly bonded to the first touch layer TL1 and the second touch layer TL2 or bonded to each other through the adhesion layer (not shown), but the disclosure is not limited thereto. In some embodiments, the casing S may be fixed to the first display panel 100 and/or the second display panel 200 by disposing a filler therebetween, but the disclosure is not limited thereto. The casing S may be used, for example, to protect the components inside the dual-sided display 10a, and may be used, for example, to dispose a trigger element TD and a transmission interface TI. In detail, in this embodiment, the trigger element TD may include a power switch TD1 for controlling an electronic device ED1 shown in FIG. 2, a screen switch TD2 for the dual-sided display 10a, a touch switch TD3 for activating the first touch layer TL1 and the second touch layer TL2, and a display switch TD4 for switching a display frame of the second display panel 200. In addition, in this embodiment, the transmission interface TI may include a high definition multimedia interface (HDMI) connection port TI1, a universal serial bus type C (USB Type C) connection port TI2, a network connection port TI3, an audio connection port TI4, and a power connection port TI5, but the disclosure is not limited thereto.

Referring to FIG. 2, in this embodiment, the dual-sided display 10a further includes the electronic device ED1 and an electronic device ED2. The electronic device ED1 is coupled to the first display panel 100 and the second display panel 200, and the electronic device ED2 is coupled to the second display panel 200. On this basis, the first surface 10S1 and the second surface 10S2 of the dual-sided display 10a may display the same frame through the electronic device ED1, and may also display different frames through the electronic device ED2. For example, when the dual-sided display 10a in this embodiment is applied to the medical display, the power switch TD1, the screen switch TD2, and the touch switch TD3 may be operated to transmit a signal to the electronic device ED1, so that the first surface 10S1 and the second surface 10S2 of the dual-sided display 10a display the same frame such as shared information, diagnosis instructions, or file labels. Furthermore, the display switch TD4 may be operated to transmit the signal to the electronic device ED2, so that the first surface 10S1 and the second surface 10S2 of the dual-sided display 10a may respectively display different frames such as document processing and announcement broadcasting. In this embodiment, the electronic device ED1 is an AIO host (all-in-one computer), and the electronic device ED2 is a playback box. However, the disclosure is not limited thereto.

In addition, in some embodiments, the dual-sided display 10a may be externally connected to a signal source through the high definition multimedia interface connection port TI1 in the transmission interface TI to replace the electronic device ED1, and may be externally connected to the signal source through the universal serial bus type C connection port TI2 in the transmission interface TI to replace the electronic device ED2, but the disclosure is not limited thereto.

In this embodiment, the dual-sided display 10a may further include an image sensor IS. In some embodiments, the image sensor IS may include a camera, an RGB-IR image sensor, or other suitable sensors, but the disclosure is not limited thereto. The image sensor IS is, for example, disposed on one side of at least one of the first display panel 100 and the second display panel 200. In this embodiment, the image sensor IS is disposed on the one side of the second display panel 200. On this basis, when the dual-sided display 10a in this embodiment is applied to the medical display, the image sensor IS may be used to photograph the patient for file creation and/or measure a body temperature of the patient, but the disclosure is not limited thereto.

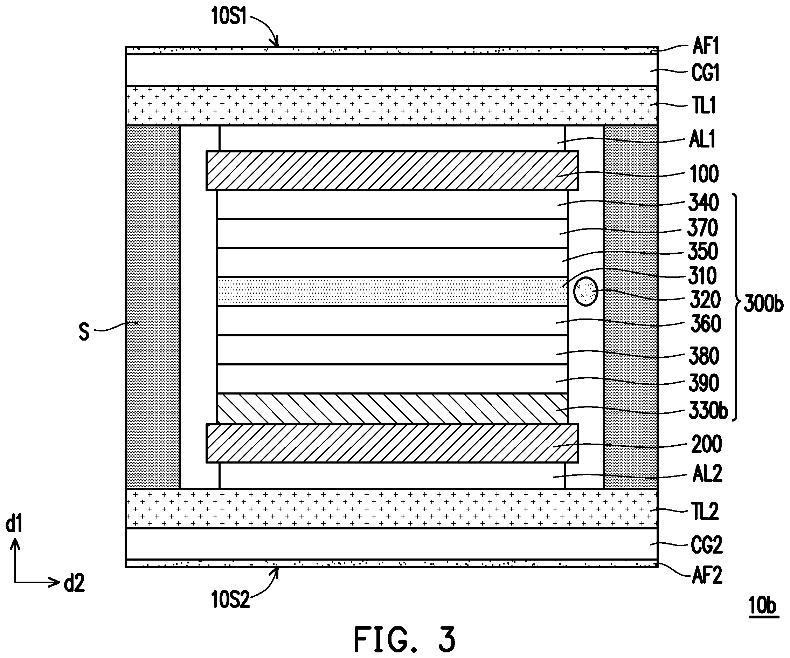

FIG. 3 is a schematic partial cross-sectional view of a dual-sided display according to another embodiment of FIG. 1A. It is noted that some of the reference numerals and descriptions in FIG. 1A may apply to FIG. 3. The same reference numerals will represent the same or similar components, and the descriptions of the same technical contents will be omitted.

Referring to FIG. 3, a main difference between a dual-sided display 10b in this embodiment and the dual-sided display 10a is that a peep-proof element 330b in a backlight module 300b of the dual-sided display 10b is a switchable peep-proof panel.

In detail, the peep-proof element 330b may include, for example, a liquid crystal panel (not shown). The liquid crystal panel includes a liquid crystal layer (not shown), two transparent electrode layers (not shown) disposed on two sides of the liquid crystal layer, and two alignment layers (not shown) respectively disposed between the liquid crystal layer and the two transparent electrode layers. By changing a voltage between the two transparent electrode layers, transmittance of the light in the liquid crystal layer may be adjusted and changed, so that the peep-proof element 330b has an effect of switching a viewing angle. On this basis, the peep-proof element 330b may switch between a common mode with a large viewing angle and a peep-proof mode with a small viewing angle by providing an electrical signal.

In some embodiments, a liquid crystal of the peep-proof element 330b (the switchable peep-proof panel) is different from a liquid crystal of the second display panel 200, but the disclosure is not limited thereto. In some other embodiments, the liquid crystal of the peep-proof element 330b is the same as the liquid crystal of the second display panel 200. In addition, in some embodiments, a width of the peep-proof element 330b (the switchable peep-proof panel) in the direction d2 is less than a width of the second display panel 200 in the direction d2, but the disclosure is not limited thereto. A measurement method of the width may be, for example, to measure a maximum length of the peep-proof element 330b or the second display panel 200 in the direction d2.

Based on the above, the backlight module in the dual-sided display provided in some embodiments of the disclosure includes the peep-proof element disposed between the light guide plate and the second display panel. Therefore, a risk of information leakage may be reduced when the second display panel is used to display the information. Furthermore, in the dual-sided displays provided in other embodiments of the disclosure, the antibacterial films are coated on the surfaces of the first cover plate and the second cover plate adjacent to the light emitting side respectively, which may reduce the possibility of the dual-sided display provided in other embodiments of the disclosure becoming the medium for the spread of the diseases under the frequent contact by the user.

## Claims

1. A dual-sided display (10a, 10b), comprising a first surface (10S1) and a second surface (10S2) opposite to the first surface (10S1), wherein the dual-sided display (10a, 10b) comprises:
a first display panel (100) configured to display an image of the first surface (10S1);
a second display panel (200) configured to display an image of the second surface (10S2); and
a backlight module (300a, 300b) disposed between the first display panel (100) and the second display panel (200) to provide light sources for the first display panel (100) and the second display panel (200), wherein the backlight module (300a, 300b) comprises:
a light guide plate (310);
a light emitting element (320) configured to provide the light source and disposed adjacent to one side of the light guide plate (310); and
a peep-proof element (330a, 330b) configured to adjust a light emission angle of a display light and disposed between the light guide plate (310) and the second display panel l (200).

2. The dual-sided display (10a, 10b) according to claim 1, further comprising:
a first touch layer (TL1), wherein the first display panel (100) is disposed between the first touch layer (TL1) and the backlight module (300a, 300b); and
a second touch layer (TL2), wherein the second display panel (200) is disposed between the second touch layer (TL2) and the backlight module (300a, 300b).

3. The dual-sided display (10a, 10b) according to claim 2, further comprising:
a first cover plate (CG1) disposed on the first touch layer (TL1), wherein a coverage area of the first cover plate (CG1) is greater than or equal to an area of the first touch layer (TL1); and
a second cover plate (CG2) disposed on the second touch layer (TL2), wherein a coverage area of the second cover plate (CG2) is greater than or equal to an area of the second touch layer (TL2),
wherein the first cover plate (CG1) and/or the second cover plate (CG2) comprise an antibacterial structure.

4. The dual-sided display (10a, 10b) according to claim 3, wherein the antibacterial structure comprises a first antibacterial film (AF1) and/or a second antibacterial film (AF2), the first antibacterial film (AF1) is disposed on one side of the first cover plate (CG1) away from the first touch layer (TL1), and the second antibacterial film (AF2) is disposed on one side of the second cover plate (CG2) away from the second touch layer (TL2).

5. The dual-sided display (10a, 10b) according to claim 1, wherein the backlight module (300a, 300b) further comprises:
a first diffusion sheet (340) disposed between the first display panel (100) and the light guide plate (310).

6. The dual-sided display (10a, 10b) according to claim 5, wherein the backlight module (300a, 300b) further comprises:
a second diffusion sheet (350) and a third diffusion sheet (360), wherein the light guide plate (310) is disposed between the second diffusion sheet (350) and the third diffusion sheet (360), and the second diffusion sheet (350) is disposed between the first diffusion sheet (340) and the third diffusion sheet (360).

7. The dual-sided display (10a, 10b) according to claim 6, wherein the backlight module(300a, 300b) further comprises:
a first prism sheet (370) disposed between the first diffusion sheet (340) and the second diffusion sheet (350); and
a second prism sheet (380) disposed between the third diffusion sheet (360) and the peep-proof element (330a, 330b).

8. The dual-sided display (10a, 10b) according to claim 7, wherein the backlight module (300a, 300b) further comprises:
a dual brightness enhancement film (390) disposed between the second prism sheet (380) and the peep-proof element (330a, 330b).

9. The dual-sided display (10a) according to claim 8, wherein the peep-proof element (330a) comprises a plurality of light shielding structures, and an angle of the dual brightness enhancement film (390) is 90 degrees to an extension direction of the light shielding structures in the peep-proof element (330a).

10. The dual-sided display (10b) according to claim 1, wherein the peep-proof element (330b) comprises a switchable peep-proof panel.

11. The dual-sided display (10b) according to claim 10, wherein a liquid crystal of the switchable peep-proof panel is different from a liquid crystal of the second display panel.

12. The dual-sided display (10b) according to claim 10, wherein a liquid crystal of the switchable peep-proof panel is the same as a liquid crystal of the second display panel.

13. The dual-sided display (10b) according to claim 10, wherein a width of the switchable peep-proof panel is less than a width of the second display panel.

14. The dual-sided display (10a, 10b) according to claim 1, further comprising an image sensor (IS), wherein the image sensor (IS) is disposed on one side of at least one of the first display panel (100) and the second display panel (200).

15. The dual-sided display (10a, 10b) according to claim 14, wherein the image sensor (IS) comprises an RGB-IR image sensor.
